# EUROPÄISCHE PATENTSCHRIFT

(11) **EP 0 556 691 B1**
(45) Veröffentlichungstag und Bekanntmachung des Hinweises auf die Patenterteilung: **10.04.1996**
(21) Anmeldenummer: 93101983.0
(22) Anmeldetag: 09.02.1993
(51) Int. Cl.: C10J 3/00, C10J 3/46

(54) **Verfahren zur Vergasung kohlenstoffhaltiger Rückstände der Mineralölverarbeitung**
Process for gazifying carbon containing residues from mineral oils processing
Procédé pour gazéifier des résidus carbonés issus du traitment d'huiles minérales

(30) Priorität: 20.02.1992 DE 4205128
(43) Veröffentlichungstag der Anmeldung: 25.08.1993
(73) Patentinhaber: RUHR OEL GmbH, D-45896 Gelsenkirchen (DE)
(72) Erfinder: Pamperin, Carl-Heinz, Dipl.-Ing., W-4270 Dorsten (DE); Schorn, Gerhard, Dr., W-4250 Bottrop (DE); Smieskol, Stefan, Dipl.-Ing., W-4300 Essen 1 (DE)
(74) Vertreter: Berg, Dirk, Dr.

(56) Entgegenhaltungen:
- EP-A- 0 108 198
- EP-A- 0 217 505
- AU-A- 518 842
- DE-A- 3 414 140
- FR-A- 2 289 475
- US-A- 4 211 540
- US-A- 4 936 869

## Beschreibung

### Verfahren zur Vergasung kohlenstoffhaltiger Rückstände der Mineralölverarbeitung

Die Erfindung betrifft ein Verfahren zur Vergasung kohlenstoffhaltiger Rückstände der Mineralölverarbeitung bei Drücken von 20 bis 60 bar mit Sauerstoff (02) aus einer Luftzerlegungsanlage unter Zusatz von Hochdruckdampf und Kühlung der heißen Reaktionsgase von etwa 1 300 °C auf 250 bis 300 °C in einem Abhitzekessel mit anschließender H2S-(Schwefelwasserstoff-) Wäsche, Konvertierung von CO (Kohlenmonoxid) und CO2-(Kohlendioxid-)Wäsche Wäsche zur Erzeugung von Roh-H2 (Wasserstoff) neben H2S und CO2.

Die Erfindung geht aus von Verfahren zur Herstellung von Roh-Synthesegas durch thermische Spaltung kohlenwasserstoffhaltiger Ausgangsmaterialien mit Sauerstoff oder sauerstoffangereicherter Luft und in Gegenwart von Wasserdampf in einer autotherm nicht-katalytischen Reaktion mit anschließender H2S-Wäsche mittels kaltem Methanol, Druckkonvertierung des schwefelfreien Gases und mit einer sich daran anschließenden zweiten Stufe der Wäsche mit kaltem Methanol, wie es in Anlagen zur Herstellung von Chemierohstoffen aus Erdöl und Erdgas weit verbreitet ist, vgl. Winnacker-Küchler, Chemische Technologie, Band 5, Organische Technologie 1, 4. Auflage, München/Wien 1981, Seite 264.

In der DE-A-3 414 140 sind Verfahren zum Betreiben von Öl- bzw. Kohlevergasungsanlagen zur Gewinnung von Synthesegas beschrieben. Zwecks verbesserter Nutzung der Prozeßwärme ist eine exergetische Abhitzeeinkoppelung in das Synthesegas bzw. den Vergaser und eine Verstromung der Restwärme in einem Kraftwerk vorgeschlagen.

In der US-A-4 936 869 ist u. a. die Kombination einer Gasturbine ("Brayton cycle") und einer Dampfturbine ("Rankine cycle") zwecks Wiederaufheizung von Sattdampf aus dem Abhitzekessel einer Texaco-Kohlevergasung beschrieben. Die Turbinen treiben Generatoren zur Erzeugung von elektrischem Strom an, der seinerseits den erheblichen Bedarf an Elektroenergie beim Betrieb des Luftzerlegers und einer Wasserstoff-Verflüssigungsanlage deckt.

Dem vorliegenden Verfahren liegt die Aufgabe zugrunde, hochkohlenstoffhaltige und insbesondere schwefelhaltige Rückstände der Mineralölverarbeitung einer besonders energiegünstigen und umweltschonenden Verwertung zuzuführen.

Das erfindungsgemäße Verfahren der eingangs genannten Art ist dadurch gekennzeichnet, daß ein Teilstrom des H2S-freien, hauptsächlich aus H2 und CO bestehenden Rohgases über eine Entspannungsturbine als Heizgas abgezweigt wird zur Erzeugung von Hochdruckdampf, der sowohl die Antriebsenergie für die Luftzerlegungsanlage und für eine Kälteanlage für den Betrieb der H2S- und der CO2-Wäsche als auch die für die Vergasungsreaktion erforderliche Dampfmenge liefert.

Als Rohstoffe werden erfindungsgemäß nicht mehr vornehmlich kohlenwasserstoffhaltige Ausgangsmaterialien wie Schweröl oder auch Raffineriegas, Erdgas u. dgl., sondern relativ wasserstoffarme kohlenstoffreiche Rückstände der Mineralölverarbeitung, insbesondere Petrolkoks, Grünkoks, schwere Rückstände, Rückstandsöle, Hydrierrückstände, Schwelteer, Vakuumrückstände aber auch pflanzliche Öle und Fette sowie deren Rückstände eingesetzt. Derartige Rückstände stellen ein erhebliches Entsorgungsproblem dar und sind durch Schaffung von Konversionskapazitäten wie Hydrocracker, Visbreaker und Coker zunehmend weiter in die Verarbeitungsstrukturen von Raffinerie eingebunden worden. Hierbei wurde die Menge dieser Rückstände immer weiter verringert, damit einher ging aber auch eine immer weitergehende Wasserstoffverarmung, ein erhöhter Schwefelgehalt und ein erhöhter Gehalt an aschebildenden Bestandteilen. Grünkoks stellt das Vorprodukt von kalziniertem Koks dar, der als Elektrodenkoks verwendet wird. Grünkoks entsteht im Coker durch thermische Behandlung hochviskoser aber noch pumpbarer Rückstände. Aufgrund seines hohen Schwefelgehaltes stellt Grünkoks ein Entsorgungsproblem dar, hier kommt eine Zumischung zu anderen Brennstoffen zur Verfeuerung zwecks Energiegewinnung aus Umweltschutzgründen nicht mehr in Betracht. Beispielsweise hat man sich aber in bestimmten Fällen so beholfen, daß durch Fluxen von Grünkoks, d. h. Zumischung von wesentlich wertvollerem schwefelarmem Heizöl die Spezifikation für Verfeuerungszwecke auf diesem wenig befriedigenden Wege wieder erreicht wurde.

Das vorliegende Verfahren wird mit besonderem Vorteil in Anlagengrößen entsprechend einer Kapazität einer stündlichen Erzeugung von mindestens 50 000 Nm³ Roh-Wasserstoff ausgeübt. Für unter diesem Wert liegende Kapazitäten würde sich der in dem vorliegenden integrierten Verfahren vorgesehene Luftzerleger für den Vergasungsteil nicht mehr rentieren. In diesen Fällen wäre es vorzuziehen, den Sauerstoff aus in der Regel vorhandenen Verbundnetzen von externen Erzeugern zu beziehen, oder auch überhaupt den Einsatz anderer Rohstoffe als Petrolkoks oder Grünkoks und die Anwendung von Steamreforming-Verfahren in Betracht zu ziehen.

Aus dem erfindungsgemäß in besonders kostengünstiger und umweltschonender Weise erzeugten Roh-Wasserstoff kann entsprechend vorteilhaft über die üblichen Stufen der Feinreinigung und Herstellung von Synthesegas Ammoniak oder Methanol erzeugt werden.

Es kann aber auch kostengünstiger Reinst-Wasserstoff erzeugt werden, der zum Beispiel in raffinerieüblichen Hydrocrackverfahren eingesetzt oder für den Export zur Verfügung gestellt werden kann.

Das erfindungsgemäße Verfahren sieht eine integrierte Kälteanlage vor. Das hier auf eine tiefe Temperatur heruntergekühlte flüssige Methanol dient in der H2S-Wäsche sowie in der nach der Konvertierungstufe vorgesehenen CO2-Wäsche zum Auswaschen von H2S bzw. CO2. Hierbei kann aus dem H2S in bekannter Weise in Anlagen zur Entschwefelung unter Bildung von elementarem Schwefel ein vielfach nutzbarer chemischer Rohstoff hergestellt werden.

Aus der CO2-Wäsche kann ohne weitere Umwandlungsverfahren ein verhältnismäßig reines für viele industrielle Abnehmer brauchbares CO2 gewonnen werden.

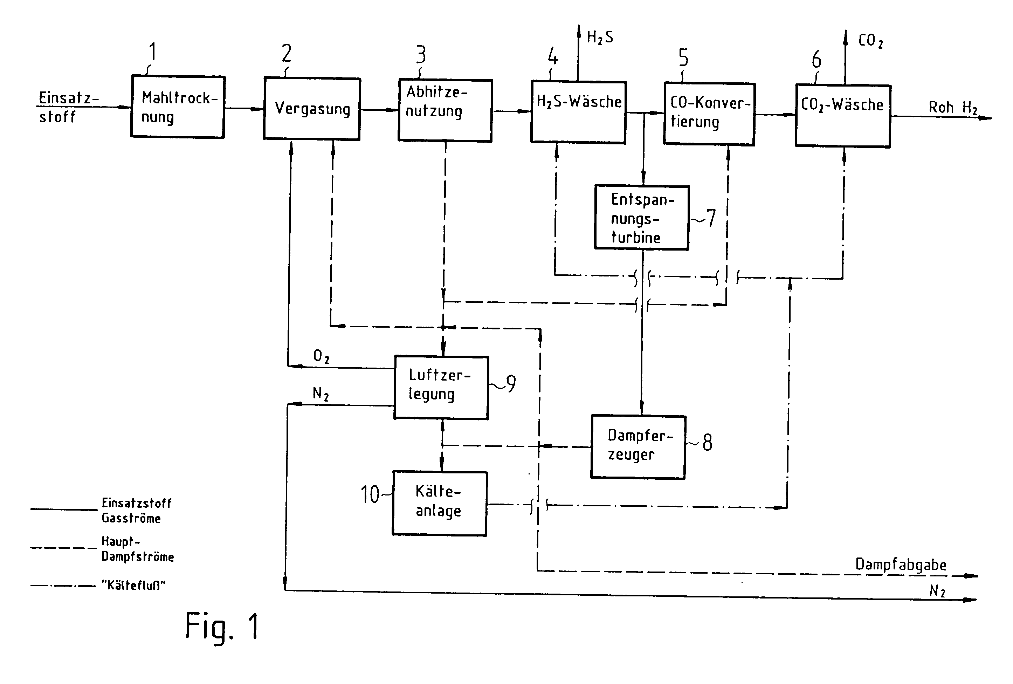

Das erfindungsgemäße Verfahren wird weiter ins einzelne gehend anhand des Fließbildes, Figur 1, näher erläutert. Das Einsatzprodukt, beispielsweise Grünkoks, Petrolkoks oder schwere kohlenwasserstoffhaltige Rückstände wird ggf. in einer Mahlanlage 1 für den Einsatz in die Vergasung 2 aufbereitet. Als weitere Einsatzstoffe werden reiner gasförmiger Sauerstoff oder mit Sauerstoff hochangereicherte stickstoffhaltige Gase, daneben Hochdruckdampf, zugeführt. Die heißen Reaktionsgase werden über einen Abhitzekessel 3, in dem Hochdruckdampf gewonnen wird, abgekühlt und über weitere in dem Fließbild nicht gezeigte Wärmeaustauscher soweit heruntergekühlt, daß sie der H2S-Wäsche 4 mit tiefkaltem Methanol unterworfen werden können. Anschließend wird der Hauptteil des H2S-freien und aus H2 und CO etwa zu gleichen Teilen bestehenden Rohgases der CO-Konvertierung 5 unterworfen, wobei ein Teilstrom Hochdruckdampf aus dem Abhitzekessel 3 zugeführt werden muß, um eine Konvertierung des CO-Anteils unter Umwandlung in CO2 und H2 zu bewirken. Aus der Konvertierung 5 wird das Rohgas der CO2-Wäsche 6 mit tiefkaltem Methanol unterworfen, in der das CO2 in bekannter Weise weitgehend ausgewaschen wird. Es fällt ein energie- und umweltschonend erzeugter Roh-H2 an, der zur weiteren Verarbeitung und Verwendung zur Verfügung steht.

Es ist ein wesentliches Merkmal des erfindungsgemäßen Verfahrens, daß aus dem nach der H2S-Wäsche 4 anfallenden H2S-freien zu etwa gleichen Teilen aus H2 und CObestehenden Rohgasstrom über eine Entspannungsturbine 7 ein Teilstrom abgezweigt wird, der als Heizgas zur zusätzlichen Dampferzeugung in einem Dampferzeuger 8 eingesetzt wird. Durch diese Maßnahme, die bei Anlegung fachmännischer Auslegungsgrundsätze für eine derartige Anlagenkonzeption nicht naheliegt, weil ein wasserstoffreiches und damit für Heizzwecke zunächst nicht in Betracht kommendes wertvolles Rohgas von dem Produktgas abgezweigt und zur Dampferzeugung im Dampferzeuger 8 eingesetzt wird, werden zwei Teilaufgaben im Rahmen des vorliegenden integrierten Verfahrensschemas gelöst, nämlich die Zurverfügungstellung von zusätzlichem Hochdruckdampf für die Vergasungsreaktion in der Vergasungsanlage 2 und für die Konvertierungsreaktion in der CO-Konvertierung 5 sowie als Antriebsenergie für die Luftzerlegung 9 und die Kälteanlage 10.

In der eingangs genannten Literaturstelle zum Stand der Technik wird für das dort beschriebene Vergasungsverfahren für Kohlenwasserstoffe mitgeteilt, daß der in dem Abhitzekessel erzeugte Dampf bei großen Anlagen zur Deckung des Dampfbedarfs des Prozesses und durch Betreiben von Entspannungsturbinen zur Deckung des gesamten elektrischen Energiebedarfs der Anlage ausreiche (vgl. a.a.O., S. 264).

Die in dem Abhitzekessel 3 bei der Nutzung der Abwärme der heißen Reaktionsgase aus der Vergasung anfallende Dampfmenge reicht nicht aus, die bei dem erfindungsgemäßen Einsatz besonders hochkohlenstoffhaltiger und wasserstoffarmer Einsatzprodukte erforderlichen Dampfmengen sowohl für die Vergasung als auch für die Konvertierung zu erzeugen.

Darüber hinaus ermöglicht die bei der erfindungsgemäßen Verfahrenskonfiguration erzeugte Menge an Hochdruckdampf einen besonders energiegünstigen Betrieb der Kompressoren für die Luftzerlegungsanlage 9 und die Kälteanlage 10 mittels (in der Figur nicht dargestellter) Dampfentspannungsturbinen. Hierbei werden die Verluste vermieden, die sich bei einem als Umweg zu beurteilenden Verfahren zum Betrieb der Kompressoren mittels elektrischem Antrieb als eine Verschlechterung des Gesamtwirkungsgrades bei den einzelnen Energieumwandlungsstufen darstellen würden.

Im Luftzerleger 9 lassen sich durch die energiegünstigen Antriebe technische Reingase wie Flüssigstickstoff, Argon oder Krypton mit sehr niedrigen Erzeugungskosten produzieren.

Eine Betrachtung der in besonders schwefelreichen und damit minderwertigen Einsatzprodukten wie Grünkoks sich ergebenden Umwandlungsstufen der enthaltenen Schwefelverbindungen durch die einzelnen Abschnitte des vorliegenden Verfahrens zeigt, daß elementarer Schwefel erzeugt wird, wohingegen der in den bei der Elektrizitätserzeugung eingesetzten fossilen Rohstoffen wie Kohle oder schweres Heizöl in Form von Schwefelverbindungen enthaltene Schwefel letztendlich in SOx-Verbindungen und über Rauchgas-Entschwefelungsanlagen in wesentlich geringer zu bewertendes Calciumsulfat-Dihydrat (Gips) umgewandelt wird.

Bei dem vorliegenden Verfahren wird gegenüber dem üblichen Einsatz beliebiger Kohlenwasserstoffe in die Vergasung durch Einsatz eines hochschwefelhaltigen und wasserstoffarmen und damit minderwertigeren Rohstoffes eine höhere Wertschöpfung erzielt, wobei zwar auch mit höheren Verarbeitungskosten, beispielsweise für höheren Sauerstoffbedarf in der Vergasung, höhere Reinigungskosten, höheren Kapitalkosten zu rechnen ist. Diese Relativierung wird erfindungsgemäß aber dadurch mehr als kompensiert, daß sämtliche Antriebsenergien in einem integrierten Prozeß ebenfalls aus diesem wenigerwertigen Rohstoff und nicht etwa aus Primärenergien oder primärenergienahen Energieformen aufgebracht werden.

## Patentansprüche

1. Verfahren zur Vergasung kohlenstoffhaltiger Rückstände der Mineralölverarbeitung bei Drücken von 20 bis 60 bar mit Sauerstoff aus einer Luftzerlegungsanlage unter Zusatz von Hochdruckdampf und Kühlung der heißen Reaktionsgase von etwa 1 300° C auf 250 bis 300° C in einem Abhitzekessel mit anschließender H2S-(Schwefelwasserstoff-)Wäsche, Konvertierung von CO (Kohlenmonoxid) und CO2-(Kohlendioxid-)Wäsche zur Erzeugung von Roh-H2 (Wasserstoff) neben H2S und CO2, dadurch gekennzeichnet, daß ein Teilstrom des H2S-freien, hauptsächlich aus Wasserstoff und CO bestehenden Rohgases über eine Entspannungsturbine als Heizgas abgezweigt wird zur Erzeugung von Hochdruckdampf, der sowohl die Antriebsenergie für die Luftzerlegungsanlage und für eine Kälteanlage für den Betrieb der H2S- und der CO2-Wäsche als auch die für die Vergasungsreaktion erforderliche Dampfmenge liefert.

2. Verfahren nach Anspruch 1, dadurch gekennzeichnet, daß Petrolkoks, Grünkoks, schwere Rückstände der Mineralölverarbeitung, Rückstandsöle, Hydrierrückstände, Schwelteer oder pflanzliche Öle und Fette eingesetzt werden.

3. Verfahren nach Anspruch 1, dadurch gekennzeichnet, daß Roh-H2 in Mengen von mindestens 50 000 Nm³/h erzeugt wird.

4. Verfahren nach Anspruch 1, dadurch gekennzeichnet, daß aus dem Roh-H2 Ammoniak oder Methanol erzeugt wird.

5. Verfahren nach Anspruch 1, dadurch gekennzeichnet, daß aus dem Roh-H2 Rein-H2 erzeugt wird.

6. Verfahren nach Anspruch 1, dadurch gekennzeichnet, daß aus der H2S-Wäsche Industrieschwefel hergestellt wird.

7. Verfahren nach Anspruch 1, dadurch gekennzeichnet, daß aus der CO2-Wäsche reines CO2 als Industriegas gewonnen wird.

8. Verfahren nach Anspruch 1, dadurch gekennzeichnet, daß aus der Luftzerlegungsanlage Stickstoff, Argon oder Krypton als technische Reingase gewonnen werden.

## Claims

1. Process for the gasification of carbon-containing residues of mineral-oil processing at pressures of 20 to 60 bar using oxygen from an air separation plant with the addition of high-pressure steam and cooling of the hot reaction gases from about 1300°C to 250 to 300°C in a waste-heat boiler with subsequent H₂S (hydrogen sulphide) washing, conversion of CO (carbon monoxide) and CO₂ (carbon dioxide) washing for the generation of crude H₂ (hydrogen) in addition to H₂S and CO₂, characterized in that a subflow of the H₂S-free crude gas composed mainly of hydrogen and CO is tapped off via a turboexpander as heating gas to generate high pressure steam which provides both the drive energy for the air separation plant and for a refrigeration plant for the operation of the H₂S and CO₂ washing and also the amount of steam necessary for the gasification reaction.

2. Process according to Claim 1, characterized in that petrocoke, green coke, heavy residues of mineral-oil processing, residual oils, hydrogenation residues, low-temperature tar or vegetable oils and fats are used.

3. Process according to Claim 1, characterized in that crude H₂ is generated in amounts of at least 50000 Nm³/h.

4. Process according to Claim 1, characterized in that ammonia or methanol is generated from the crude H₂.

5. Process according to Claim 1, characterized in that pure H₂ is generated from the crude H₂.

6. Process according to Claim 1, characterized in that industrial sulphur is produced from the H₂S washing.

7. Process according to Claim 1, characterized in that pure CO₂ is produced as industrial gas from the CO₂ washing.

8. Process according to Claim 1, characterized in that nitrogen, argon or krypton are produced as industrial pure gases from the air separation plant.

## Revendications

1. Procédé pour gazéifier des résidus carbonés, issus du traitement d'huiles minérales à des pressions de 20 à 60 bars, avec de l'oxygène à partir d'une installation pour le fractionnement de l'air, en utilisant de la vapeur à haute pression et en refroidissant les gaz de réaction chauds d'environ 1300°C à 250°C jusqu'à 300°C dans une chaudière de récupération de chaleur, avec lavage subséquent de SH₂ (hydrogène sulfuré), conversion de CO (monoxyde de carbone) et lavage de CO₂ (dioxyde de carbone), pour l'obtention de H₂ brut (hydrogène) à côté de SH₂ et de CO₂, caractérisé en ce qu'un courant partiel de gaz brut formé principalement d'hydrogène et de CO, dépourvu de SH₂, est séparé par l'intermédiaire d'une turbine de détente sous forme de gaz chaud en vue de l'obtention de vapeur à haute pression, qui fournit aussi bien l'énergie de commande pour l'installation de fractionnement de l'air et pour une installation frigorifique, pour la commande de lavage de SH₂ et de CO₂, que la quantité de vapeur nécessaire pour la réaction de gazéification.

2. Procédé selon la revendication 1, caractérisé en ce que l'on met en oeuvre des cokes de pétrole, des cokes bruts, des résidus lourds de transformation d'huiles minérales, des huiles de résidus, des résidus d'hydrogénation, des goudrons par distillation lente ou des huile et matières grasses végétales.

3. Procédé selon la revendication 1, caractérisé en ce que l'on produit du H₂ brut en quantité d'au moins 50 000 Nm³/h.

4. Procédé selon la revendication 1, caractérisé en ce que l'on produit, à partir de H₂ brut, de l'ammoniac ou du méthanol.

5. Procédé selon la revendication 1, caractérisé en ce que l'on produit du H₂ pur à partir de H₂ brut.

6. Procédé selon la revendication 1, caractérisé en ce que l'on fabrique, à partir du lavage de H₂, du soufre industriel.

7. Procédé selon la revendication 1, caractérisé en ce que, à partir du lavage de CO₂, on produit du CO₂ pur sous forme de gaz industriel.

8. Procédé selon la revendication 1, caractérisé en ce que l'on produit, à partir des installations de fractionnement de l'air, de l'azote, de l'argon ou du krypton sous forme de gaz purs industriels.
